# EUROPÄISCHE PATENTSCHRIFT

(11) **EP 1 066 913 B1**
(45) Veröffentlichungstag und Bekanntmachung des Hinweises auf die Patenterteilung: **03.11.2004**
(21) Anmeldenummer: 00111462.8
(22) Anmeldetag: 27.05.2000
(51) Int. Cl.: B23P 15/40, C21D 9/18, C21D 1/09, B26B 9/00

(54) **Verfahren zur Herstellung einer Klinge eines Schneidwerkzeuges und damit hergestelltes Erzeugnis**
Method of manufacturing a blade for a cutting tool and product obtained thereby
Procédé de fabrication d' une lame pour un outil de coupe et produit ainsi obtenu

(30) Priorität: 09.07.1999 DE 19931948
(43) Veröffentlichungstag der Anmeldung: 10.01.2001
(73) Patentinhaber: Zwilling J. A. Henckels Aktiengesellschaft, 42657 Solingen (DE)
(72) Erfinder: Dr. Droese, Joachim, 40764 Langenfeld (DE)
(74) Vertreter: Stenger, Watzke & Ring Patentanwälte

(56) Entgegenhaltungen:
- EP-A- 0 191 203
- FR-A- 2 698 885
- GB-A- 2 160 227
- US-A- 4 488 882
- US-A- 5 724 868
- US-A- 5 906 053
- PATENT ABSTRACTS OF JAPAN vol. 017, no. 361 (C-1080), 8. Juli 1993 (1993-07-08) -& JP 05 051628 A (KOBE STEEL LTD), 2. März 1993 (1993-03-02)

## Beschreibung

Die Erfindung betrifft ein Verfahren zur Herstellung einer Klinge eines Schneidwerkzeugs, insbesondere eines Messers. Ferner betrifft die Erfindung eine nach dem Verfahren hergestellte Klinge.

Aus dem Stand der Technik sind Verfahren zur Herstellung einer Klinge eines Schneidwerkzeugs bekannt. Zunächst wird in einer ersten Herstellungsstufe, ausgehend von einem als Flachmaterial vorliegenden Ausgangsmaterial, durch Stanzen ein Klingenrohling hergestellt, dessen geometrische Ausmaße in etwa denen der späteren Klingenform entsprechen. Die Bearbeitung des Ausgangsmaterials kann beispielsweise durch Verfahren der Stanztechnik, Druckumformung, Biegeumformung oder Schubumformung erfolgen. Auch das Zuschneiden eines Klingenrohlings ist aus dem Stand der Technik bekannt. In einer zweiten Herstellungsstufe erfolgt sodann die Feinbearbeitung des Klingenrohlings. Einerseits wird die endgültige Klingenkontur sowie andererseits der Schneidenbereich ausgebildet, wobei hierfür entsprechende Schleifmittel verwendet werden. In der dritten Herstellungsstufe schließlich wird die Randschicht des Klingenmaterials im Schneidenbereich gehärtet, wozu die Klinge einem Wärmebehandlungsverfahren unterzogen und die Randschicht mit einem Zusatzwerkstoff, wie beispielsweise Wolfram, Chrom oder Titan angereichert werden kann. Insbesondere wird das Nitrieren als thermomechanisches Diffusions-Behandlungsverfahren eingesetzt, wobei die chemische Zusammensetzung der Randschicht dadurch verändert wird, daß Stickstoff in atomarer Form in die Werkstoffoberfläche diffundiert. Zur Bildung sehr harter, chemisch und thermisch sehr beständiger Nitride können stickstoffaffine Legierungselemente zugegeben werden. Im Anschluß an das Randschichthärten ist je nach verwendetem Behandlungsverfahren abschließend in einer vierten Herstellungsstufe die Nachbearbeitung der Klingen und insbesondere des Schneidenbereiches, beispielsweise durch Schleifen, vonnöten.

Bekannt geworden aus der japanischen Offenlegungsschrift JP 05-051628 ist ein aus Titan oder einer Titanlegierung bestehendes Schneidwerkzeug. Um eine hinreichende Härte des Klingenbereiches erzielen zu können, wird gemäß dieser Druckschrift vorgeschlagen, den aus Titan oder einer Titanlegierung bestehenden Grundwerkstoff des Schneidwerkzeuges unter Verwendung von Stickstoffgas aufzuhärten. Als Wärmebehandlungsverfahren wird die Wärmebehandlung mittels Laser vorgeschlagen, wobei vorgeschlagen ist, eine solche Wärmebehandlung in einer geschlossenen Kammer unter Stickstoffgasatmosphäre durchzuführen. Um eine über die Aufhärtung des Grundwerkstoffes hinausgehenden Gefügeveränderung des Schneidwerkzeugmaterials zu verhindern, ist zudem die Verwendung von Schutzgas, wie z. B. Argon vorgesehen. Der Einsatz eines aus Titan oder einer Titanlegierung bestehenden Grundwerkstoffes ist zwar insoweit von Vorteil, als daß Titan von Hause aus vergleichsweise lebensmittelneutral ist, doch ist die Aufhärtung eines aus Titan oder einer Titanlegierung bestehenden Grundwerkstoffes mittels Stickstoffgas sehr aufwendig und damit kostenintensiv.

Üblicherweise erfolgt gemäß den vorbekannten Herstellungsverfahren eine Durchhärtung oder eine Randschichthärtung mit einer Härttiefe von < 0,2 mm, was in Verbindung mit einer Versprödung ein Abplatzen der harten Randschicht begünstigt. So hat sich insbesondere die Ausbildung einer derartigen Randschicht bei der Herstellung einer Messerklinge als nachteilig erwiesen, da die Verwendung zusammen mit einer harten Schneidunterlage, zum Beispiel aus Glas oder Keramik, zum bereichsweisen Abplatzen der Randschicht führen kann. Infolge eines Abplatzens der gehärteten Randschicht wird der Schneidbereich der Klinge zerstört, womit das Messer für den bestimmungsgemäßen Einsatz unbrauchbar wird. Auch eine schlagartige Belastung der Klinge, beispielsweise wenn diese aus einer gewissen Höhe fallen gelassen wird und auf einer harten Unterlage aufschlägt, kann mit Nachteil zu einem Abplatzen der gehärteten Randschicht führen.

Die vorbekannten Verfahren zur Herstellung einer Klinge weisen desweiteren den Nachteil auf, daß sie zum Teil sehr aufwendig und damit kostenintensiv sind, da je nach verwendetem Verfahren zur Härtung der Randschicht eine Nachbearbeitung, beispielsweise mittels Schleifen, des Schneidenbereiches der Klinge erforderlich ist. Hieraus ergibt sich zudem, daß eine Automatisierung der vorbekannten Herstellungsverfahren nur schwer darzustellen ist.

Ausgehend von diesem Stand der Technik liegt der Erfindung die Aufgabe zugrunde, unter Vermeidung der oben genannten Nachteile ein Verfahren zur Herstellung eines Schneidwerkzeuges zu schaffen, mit welchem gezielt auf die technologischen Materialeigenschaften der Klinge Einfluß genommen und ein Materialabplatzen vermieden als auch eine kostengünstige Herstellung ermöglicht werden soll.

Zur **Lösung** dieser Aufgabe wird mit der Erfindung ein Verfahren zur Herstellung einer Klinge eines Schneidwerkzeuges, insbesondere eines Messers, vorgeschlagen, bei dem
a) der aus einem legierten Stahl bestehende Klingengrundwerkstoff in einem ersten Verfahrensschritt entlang einer durch die spätere Schneide der Klinge bestimmten Kurvenkontur laserbehandelt wird und in einem zweiten Verfahrensschritt die Schneide der Klinge entlang der durch die spätere Klingenform bestimmten Kurvenkontur innerhalb des laserbehandelten Bereichs geformt, insbesondere zugeschnitten wird,
   oder
b) der aus einem legierten Stahl bestehende Klingengrundwerkstoff in einem ersten Verfahrensschritt durch Ausstanzen oder Abgraten zur Formung der späteren Schneide bearbeitet wird, anschließend in einem zweiten Verfahrensschritt auf der die spätere Schneide bildenden Schmalseite die Laserbehandlung durchgeführt und anschließend in einem dritten Verfahrensschritt innerhalb des laserbehandelten Bereichs die Schneide geformt, insbesondere geschliffen wird,
wobei die Laserbehandlung mittels Laserstrahldispergieren oder Laserstrahllegieren erfolgt und wobei nach einem Aufschmelzen des aus einem legierten Stahl bestehenden Klingengrundwerkstoffs zur Erzielung eines feinstkörnigen Gefüges hoher Festigkeit bei gleichzeitig guter Zähigkeit und Verschleißbeständigkeit in die schmelzflüssige Phase des Klingengrundwerkstoffs Zusatzwerkstoffe eingebracht werden.

Die Laserbehandlung des Klingengrundwerkstoffs hat in vorteilhafter Weise neben der thermisch bedingten Verbesserung der Werkstoffeigenschaften zudem eine chemische Aufwertung des Materials im Oberflächenbereich zur Folge. Dabei wird durch den Lasereinsatz eine thermochemische Beeinflussung des Grundwerkstoffs erreicht, womit ein feinstkörniges Gefüge hoher Festigkeit bei gleichzeitig guter Zähigkeit erzielbar ist. Die Werkstoffmodifikation erfolgt bei einer Temperatur oberhalb der schmelzflüssigen Phase des Substratmaterials, wobei der obere Grenzwert für die Aufheizung des Materials durch die Verdampfungstemperatur gegeben ist. Nach einem Aufschmelzen des Grundwerkstoffes werden für die gezielte Werkstoffmodifikation Zusatzwerkstoffe in die schmelzflüssige Phase des Grundwerkstoffes eingebracht und mit diesem vermischt. In vorteilhafter Weise wird hierdurch nicht nur eine Aufhärtung des Grundwerkstoffes erreicht, sondern vielmehr eine Aufwertung der Materialeigenschaften bewirkt, die sich neben einer Härtesteigerung durch eine Verbesserung der Verschleißbeständigkeit auszeichnet.

In vorteilhafter Weise sieht das erfindungsgemäße Verfahren gemäß einer ersten Alternative vor, daß vor einem Ausbilden der endgültigen Schneide die Laserbehandlung durchgeführt wird. Hierbei erfolgt die Laserbehandlung entlang einer durch die spätere Schneide der Klinge bestimmten Kurvenkontur. Erst im zweiten Verfahrensschritt erfolgt sodann die Endbearbeitung der Schneide. Sowohl durch die Auswahl der verwendeten Werkstoffe bzw. Werkstoffkomponenten als auch durch aufeinander angepaßte und abgestimmte Verfahrensschritte kann somit gezielt auf die Materialeigenschaften Einfluß genommen werden.

Gemäß einer zweiten Alternative wird mit dem erfindungsgemäßen Verfahren vorgeschlagen, die Laserbehandlung auf der die spätere Schneide bildenden Schmalseite der Klinge durchzuführen. Hierzu wird zunächst in einem ersten Verfahrensschritt der Klingengrundwerkstoff durch Ausstanzen oder Abgraten zur Formung der späteren Schneide bearbeitet. Anschließend wird in einem zweiten Verfahrensschritt die Laserbehandlung auf der die spätere Schneide bildenden Schmalseite durchgeführt. In einem dritten Verfahrensschritt wird schließlich die Schneide innerhalb des laserbehandelten Bereiches geformt, insbesondere geschliffen. Die Laserbehandlung auf der die spätere Schneide bildenden Schmalseite der Klinge ermöglicht eine gezielte Einflußnahme auf die Materialeigenschaften des Klingengrundwerkstoffes in einer quer zur Längsrichtung der späteren Schneide liegenden Richtung. In Abhängigkeit der verwendeten Werkstoffe bzw. Werkstoffkomponenten können mithin hochwertige Werkstoffbereiche geschaffen werden, die dem späteren Schneidenbereich entsprechen und den an die Werkstoffbereiche gestellten Anforderungen gerecht werden.

In Abhängigkeit der Art und Weise, wie der Zusatzwerkstoff der vom Laserstrahl aufgeschmolzenen Zone zugeführt werden soll, kann zwischen einstufigem und zweistufigem Prozeß unterschieden werden. Bei der zweistufigen Laserbehandlung besteht der erste Arbeitsschritt darin, den Zusatzwerkstoff auf den Grundwerkstoff aufzutragen, wobei der Werkstoffauftrag entlang einer durch die spätere Schneide der Klinge bestimmten Kurvenkontur erfolgt. Im darauf folgenden zweiten Prozeßschritt erfolgt sodann die Nachbehandlung der aufgetragenen Deckschicht durch den Laserstrahl. Bei der einstufigen Laseroberflächenbehandlung wird hingegen der vom Laserstrahl aufgeschmolzenen Zone der Zusatzwerkstoff direkt zugeführt.

Mit dem erfindungsgemäßen Verfahren wird mithin nicht nur eine Aufhärtung im Schneidenbereich der Klinge bewirkt, sondern durch Aufschmelzen des Grundwerkstoffs und durch die Zuführung von Zusatzwerkstoffen eine Materialveränderung über die gesamte Breite, die gesamte Länge und die gesamte Tiefe der Schneide erzielt. Ein Abplatzen der Randschicht im Schneidenbereich kann somit auch bei Verwendung einer harten Schneidunterlage vermieden werden.

Sowohl der Verfahrensschritt der Laserbehandlung als auch der Verfahrensschritt des Zuschnitts der Klinge können in vorteilhafter Weise automatisiert und direkt hintereinander geschaltet durchgeführt werden. Dabei hat sich insbesondere die Laserbehandlung gemäß dem einstufigen Prozeß als flexibler einsetzbar erwiesen.

Gemäß einem Merkmal der Erfindung kann in einem den beiden ersten Verfahrensschritten nachfolgenden dritten Verfahrensschritt ein Nachbearbeiten der Klinge, insbesondere der Schneide, erfolgen.

Erfindungsgemäß kann die Laserbehandlung gemäß einer ersten Alternative mittels Laserstrahllegierenerfolgen. Das Laserstrahllegieren ermöglicht durch den Einbau geeigneter Zusatzwerkstoffe die Herstellung hochwertiger Legierungsbereiche. Als thermomechanisch wirksame Laserbehandlung gehen beim Legieren die verwendeten Zusatzwerkstoffe vollständig in Lösung und werden durch die rasche Abkühlung in Lösung gehalten. Durch das Laserstrahllegieren wird im Bereich der wirkenden Legierungseffekte ein Verbundwerkstoff erzeugt, der aufgrund seines höheren Legierungsgrades sowie des durch die rasche Erstarrung hervorgerufenen Gefügezustandes eine höhere Verschleißfestigkeit als ein Vergütungsgefüge aufweist. Auch wird in vorteilhafter Weise eine deutliche Härtesteigerung erzielt.

Erfindungsgemäß kann die Laserbehandlung gemäß einer zweiten Alternative mittels Laserstrahldispergieren erfolgen. Bei dieser alternativen Laserbehandlung werden - wie auch beim Laserlegieren - höher schmelzende Zusatzwerkstoffe in die vom Laser aufgeschmolzene Grundwerkstoffschmelze eingebracht. Im Gegensatz zum Legieren erfolgt jedoch beim Dispergieren ein Einbetten der festen Zusatzwerkstoffe in das aufgeschmolzene Substrat, wobei es angestrebt ist, die in die Schmelze eingebrachten Zusatzwerkstoffe möglichst in ihrer ursprünglichen Form zu erhalten. Wie auch beim Laserlegieren wird beim Laserdispergieren eine deutlich höhere Verschleißfestigkeit erzielt.

Gemäß einem weiteren Merkmal der Erfindung werden beim Laserstrahllegieren bzw. -dispergieren als Zusatzwerkstoffe Chrom, Wolfram, Molybdän, Titan, Vanadium, Tantal, Nickel, Kobalt, Mangan oder eine Kombination hieraus zur Herstellung hochwertiger Werkstoffbereiche verwendet. In vorteilhafter Weise kann durch die Wahl entsprechender Zusatzwerkstoffe gezielt auf die Materialeigenschaften Einfluß genommen werden.

Gemäß einem weiteren Merkmal der Erfindung werden als Zusatzwerkstoffe hochschmelzende Karbide, Nitride und/oder Oxide verwendet. Die Verwendung dieser Zusatzwerkstoffe ist insbesondere im Zusammenhang mit der Anwendung des Laserstrahldispergierens von Vorteil, wobei die hochschmelzenden Zusatzwerkstoffe in die duktile Matrix eines niedrig schmelzenden Grundwerkstoffes eingebaut werden und so Bereiche mit deutlich erhöhten Härteeigenschaften ausbilden.

Gemäß einem weiteren Merkmal der Erfindung werden die Zusatzwerkstoffe draht-, gas-, pulver- und/oder pastenförmig der vom Laserstrahl aufgeschmolzenen Zone des Grundwerkstoffes direkt zugeführt. Im Vergleich zum zweistufigen Prozeß, bei dem zunächst der Zusatzwerkstoff auf die Oberfläche des Grundwerkstoffes aufgetragen und erst im zweiten Prozeßschritt durch den Laserstrahl eingeschmolzen wird, ermöglicht der einstufige Prozeß die simultane Zuführung des Zusatzwerkstoffes, wobei hierdurch größere Variationsmöglichkeiten geschaffen werden. Insbesondere die Zuführung des Zusatzwerkstoffes sowohl in Gas-, Pulver- und/oder Pastenform eröffnet eine Vielzahl unterschiedlichster Gestaltungsmöglichkeiten.

Gemäß einem weiteren Merkmal der Erfindung wird der Klingengrundwerkstoff nach erfolgter Laseroberflächenbehandlung einer nachfolgenden Wärmebehandlung unterzogen. Insbesondere ist das Vorsehen einer Wärmebehandlung nach erfolgtem Laserstrahllegieren von Vorteil, da durch das Laserstrahllegieren ein Verbundwerkstoff erzeugt wird, der im Legierungsbereich aufgrund seines höheren Legierungsgrades sowie aufgrund des durch die rasche Erstarrung hervorgerufenen Gefügezustandes eine höhere Verschleißfestigkeit aufweist. Infolge der Umwandlungs- und Ausscheidungsvorgänge kann durch eine dem Laserstrahllegieren nachgeschaltete Wärmebehandlung eine deutliche Härtesteigerung erzielt werden.

Gemäß einem weiteren Merkmal der Erfindung erfolgt die Formgebung der Klinge mittels Laser. Der Zuschnitt mittels Laser ermöglicht einerseits einen exakten und präzise vorgebbaren Schnittverlauf, andererseits wird der zuvor im ersten Verfahrensschritt laserbehandelte Bereich nicht geschädigt.

Gemäß einem weiteren Merkmal der Erfindung wird der laserbehandelte Bereich entsprechend der späteren Schneidenform der Klinge zugeschnitten. Anders als bei den aus dem Stand der Technik bekannten Verfahren wird mithin vorgeschlagen, nicht nur die Klingenform als solche durch den Zuschnitt mittels Laser herzustellen, sondern gleichzeitig mit dem Zuschnitt die Schneidenform auszubilden. Zur Ausbildung eventueller Feinheiten kann eine Nacharbeitung, beispielsweise durch Schleifen, der Klinge und insbesondere der Schneide erfolgen.

Eine nach dem erfindungsgemäßen Verfahren hergestellte Klinge verfügt im Vergleich zum unbehandelten Grundwerkstoff im laserbehandelten Bereich über eine mechanische und chemische Aufwertung. Hierdurch wird nicht nur eine Härtesteigerung gegenüber dem Grundwerkstoff erreicht, sondern auch im Vergleich zu konventionell vergüteten Werkstoffen durch den Einbau geeigneter Zusatzwerkstoffe die Möglichkeit geschaffen, gezielt auf die Materialeigenschaften Einfluß zu nehmen und hinsichtlich Korrosionsbeständigkeit und Verschleißfestigkeit je nach Anwendungsfall zu variieren. Dabei weist der laserbehandelte Bereich einen hohen Aufmischungsgrad zwischen Grundwerkstoff und Zusatzwerkstoff auf. Dabei ist ein hoher Aufmischungsgrad die Folge einer intensiven Durchmischung des schmelzflüssigen Grundwerkstoffes und dem jeweiligen Zusatzwerkstoff. In vorteilhafter Weise wird hierdurch ein Bereich geschaffen, der über seine gesamte Ausdehnung gleichbleibende Eigenschaften aufweist, was ein bereichsweises Abplatzen des oberflächenbehandelten Bereiches verhindert.

Weitere Einzelheiten und Vorteile der Erfindung ergeben sich aus der folgenden Beschreibung anhand der Zeichnung. Dabei zeigen:
- Fig. 1: eine Seitenansicht des Ausgangswerkstücks vor dem ersten Verfahrensschritt gemäß der ersten Alternative des erfindungsgemäßen Verfahrens;
- Fig. 2: eine Seitenansicht des Ausgangswerkstücks nach Vollendung des ersten und vor Beginn des zweiten Verfahrensschrittes gemäß der ersten Alternative des erfindungsgemäßen Verfahrens;
- Fig. 3: eine Seitenansicht gemäß Fig. 2 einschließlich der Kurvenkontur der späteren Klingenform;
- Fig. 4: eine Schnittdarstellung entlang der Schnittlinie IV-IV gemäß Fig. 3;
- Fig. 5: eine vergrößerte Darstellung des Bereichs V der Fig. 4;
- Fig. 6: eine alternative Ausgestaltung gemäß Fig. 5;
- Fig. 7: eine alternative Ausgestaltung gemäß Fig. 5;
- Fig. 8: eine Seitenansicht der fertiggestellten Klinge nach Vollendung des zweiten Verfahrensschrittes;
- Fig. 9: eine Schnittdarstellung des Ausgangswerkstücks entlang einer quer zur Schneide liegenden Schnittlinie nach erfolgter Laserbehandlung gemäß der zweiten Alternative des erfindungsgemäßen Verfahrens und
- Fig. 10: eine Schnittdarstellung einer fertiggestellten Klinge gemäß Fig. 9.

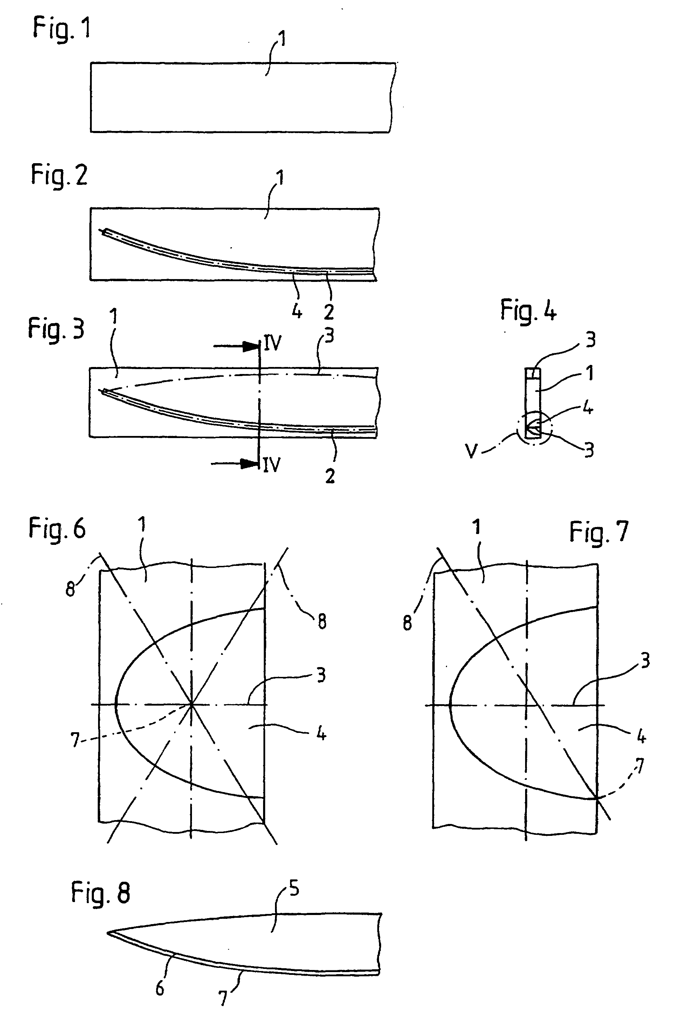

In Fig. 1 ist schematisch das mit 1 gekennzeichnete Ausgangswerkstück dargestellt, aus dem unter Anwendung des erfindungsgemäßen Verfahrens die Klinge 5 eines Schneidwerkzeugs, insbesondere eines Messers, hergestellt wird.

Das Ausgangswerkstück 1 weist eine bestimmte Länge, Breite sowie Höhe auf und besteht bevorzugtermaßen aus einem legierten Stahl, beispielsweise X 20 Cr 13.

Im ersten Verfahrensschritt wird zur Herstellung der Klinge eine Laserbehandlung des Klingengrundwerkstoffes entlang einer durch die spätere Schneide der Klinge bestimmten Kurvenkontur 2 durchgeführt. Dies zeigt Fig. 2. Als Laserbehandlungsverfahren eigenen sich insbesondere das Laserstrahllegieren sowie das Laserstrahldispergieren. Beide Verfahren ermöglichen die gezielte Einflußnahme auf die Materialeigenschaften durch Aufschmelzen des Grundwerkstoffes und den Einbau geeigneter Zusatzwerkstoffe wie beispielsweise Chrom, Wolfram, Molybdän, Titan, Vanadium, Tantal, Nickel, Kobalt oder Mangan. Beim Legieren gehen diese Zusatzwerkstoffe vollständig in Lösung und werden infolge der raschen Erstarrung zum großen Teil auch nach der Abkühlung in Lösung erhalten. Beim Dispergieren hingegen werden die in die Schmelze eingebrachten Zusatzwerkstoffe möglichst in ihrer ursprünglichen Form erhalten und als hochschmelzende Hartstoffe in das aufgeschmolzene Substrat eingebettet. Durch eine derartige Laserbehandlung wird einerseits eine gegenüber dem Grundwerkstoff deutliche Härtesteigerung erzielt, zudem wird andererseits gegenüber herkömmlichen Verfahren zusätzlich eine Verbesserung der Verschleißbeständigkeit erreicht.

In Abhängigkeit des verwendeten Stahlwerkstoffs kann ein laseroberflächenbehandelter Bereich 4 entlang einer durch die spätere Schneide der Klinge bestimmten Kurvenkontur 2 ausgebildet werden, dessen Schmelzspurbreite bei der Verwendung handelsüblicher Laser Werte zwischen 0,6 mm bis 6,0 mm annehmen kann. Dabei werden üblicherweise Einschmelztiefen von > 1,0 mm erzielt.

Fig. 3 zeigt ein laserbehandeltes Ausgangwerkstück 1 gemäß Fig. 2, wobei die mit 3 gekennzeichnete Kurvenkontur der späteren Klingenform zusätzlich dargestellt ist. Im Bereich der erfolgten Laserbehandlung fallen dabei die Kurvenkontur 2 der späteren Schneide und die Kurvenkontur 3 der späteren Klingenform zusammen.

Einen Schnitt quer zur Längsrichtung des Werkstückes 1 zeigt Fig. 4. Zu erkennen ist hier der schematisch angedeutete Verlauf der Kurvenkontur 3 sowie der im unteren Bereich des Werkstücks 1 infolge der Laserbehandlung ausgebildete Bereich 4. Eine Vergrößerung dieses Bereiches zeigt Fig. 5.

Im Anschluß an die Laseroberflächenbehandlung erfolgt in einem zweiten Verfahrensschritt die Formgebung der Klinge entlang einer durch die spätere Klingenform bestimmten Kurvenkontur 3. Dies erfolgt gemäß einem Vorschlag der Erfindung mittels Laser. In vergrößerter Darstellung zeigt dies Fig. 5. Zur Formgebung der Klinge wird diese zunächst entlang der Schnittlinie 8 mittels Laser zugeschnitten. Wie Fig. 5 deutlich erkennen läßt, verläuft die Schnittlinie 8 deckungsgleich mit der Kurvenkontur 3 innerhalb des laserbehandelten Bereichs des Ausgangswerkstücks 1. Nach erfolgtem Klingenzuschnitt wird die Schneide durch Ausbilden der Schneidkanten geformt. Dies geschieht bevorzugterweise mittels entsprechender Schleifmittel. Einen möglichen Schneidkantenverlauf 9 zeigt beispielhaft Fig. 5. Zudem ist aus Fig. 5 zu erkennen, daß die spätere Schneidkante nicht nur einen Bereich aufweist, der durch die Laserbehandlung eine Aufhärtung erfahren hat, sondern daß die Schneidkante über ihre gesamte Breite, Länge und Tiefe (siehe Fig. 3) eine durch die Laserbehandlung erzeugte Materialveränderung aufweist, womit ein bereichsweises Materialabplatzen verhindert wird.

Eine im Vergleich zu Fig. 5 alternative Ausgestaltungsform der Schneide zeigt Fig. 6. Zu erkennen ist hier, daß die beiden durch die Schnittlinien 8 angedeuteten Schnittverläufe derart den laseroberflächenbehandelten Bereich durchtrennen, daß eine Schneide ausgebildet wird. Der Zuschnitt der Klinge erfolgt also unter gleichzeitiger Ausbildung der Schneidkanten, deren spätere Wate 7 mittig im oberflächenbehandelten Bereich 4 angeordnet ist und deren durch die Schnittlinien 8 gekennzeichneten Schneidkanten unter einem Winkel < 90° aufeinander stehen.

Fig. 7 zeigt eine weitere alternative Austaltungsform, bei der die spätere Wate 7 nicht mittig, sondern am Rand des laseroberflächenbehandelten Bereichs 4 angeordnet ist und die beiden späteren Schneidkanten der Schneide zum einen durch die Körperkante des Werkstücks 1 und zum anderen durch mit 8 gekennzeichnete Schnittlinie gebildet werden.

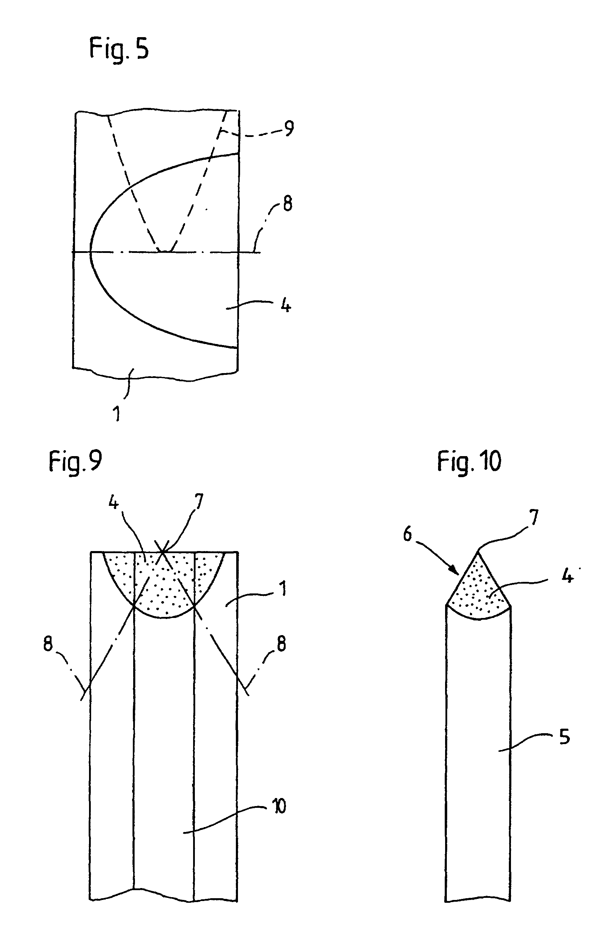

Fig. 8 zeigt eine nach dem Verfahren hergestellte Klinge 5 mit einem als 6 gegebenenfalls durch Nacharbeiten ausgebildeten Schneidbereich und einer Wate 7.

In den Fig. 9 und 10 ist die Herstellung einer Klinge dargestellt, bei der die Laserbehandlung auf der die spätere Schneide bildenden Schmalseite durchgeführt wird. Zunächst wird in einem ersten Verfahrensschritt das Ausgangswerkstück 1 durch Ausstanzen oder Abgraten zur Formung der späteren Schneide bearbeitet. Im Anschluß daran folgt in einem zweiten Verfahrensschritt die Laserbehandlung der die spätere Schneide bildenden Schmalseite. Eine Schnittdarstellung des Ausgangswerkstücks 1 nach erfolgter Laserbehandlung zeigt Fig. 9. Zu erkennen ist hier der auf der Schmalseite des Ausgangswerkstücks 1 ausgebildete laserbehandelte Bereich 4. Im Anschluß an die Laserbehandlung erfolgt in einem dritten Verfahrensschritt die Ausbildung der Schneide innerhalb des laserbehandelten Bereiches 4. Mit den Schnittlinien 8 ist in Fig. 9 beispielhaft der Schneidkantenverlauf der späteren Klinge dargestellt, wobei die Wate 7 über den Schnittpunkt der beiden unter einem Winkel < 90° aufeinander stehende Linien 8 definiert ist. Auch bei der nach Fig. 9 hergestellten Klinge ist eine Schneidkante ausgebildet, die nicht nur in Randbereichen, sondern über ihre gesamte Breite, Länge und Tiefe eine durch Laserbehandlung erzeugte Materialveränderung aufweist, was ein bereichsweises Materialabplatzen auch bei der Verwendung harter Schneidunterlagen verhindert.

Fig. 10 zeigt eine nach dem erfindungsgemäßen Verfahren hergestellte Klinge 5 mit einem Schneidbereich 6 und einer Wate 7. Wie die Fig. deutlich zeigt, erstreckt sich der die im Vergleich zum Grundwerkstoff materialveränderte Eigenschaften aufweisende laserbehandelte Bereich über den gesamten Schneidenbereich.

### Bezugszeichenliste

- 1: Ausgangswerkstück
- 2: Schneidenkontur
- 3: Klingenkontur
- 4: oberflächenbehandelter Bereich
- 5: Klinge
- 6: Schneidenbereich
- 7: Wate
- 8: Schnittlinienverlauf
- 9: Schneidkantenverlauf
- 10: spätere Klingenform

## Patentansprüche

1. Verfahren zur Herstellung einer Klinge eines Schneidwerkzeuges, insbesondere eines Messers, wobei
a) der aus einem legierten Stahl bestehende Klingengrundwerkstoff in einem ersten Verfahrensschritt entlang einer durch die spätere Schneide der Klinge (5) bestimmten Kurvenkontur laserbehandelt wird und in einem zweiten Verfahrensschritt die Schneide der Klinge (5) entlang der durch die spätere Klingenform bestimmten Kurvenkontur innerhalb des laserbehandelten Bereichs geformt, insbesondere zugeschnitten wird
oder
b) der aus einem legierten Stahl bestehende Klingengrundwerkstoff in einem ersten Verfahrensschritt durch Ausstanzen oder Abgraten zur Formung der späteren Schneide bearbeitet wird, anschließend in einem zweiten Verfahrensschritt auf der die spätere Schneide bildenden Schmalseite die Laserbehandlung durchgeführt und anschließend in einem dritten Verfahrensschritt innerhalb des laserbehandelten Bereichs die Schneide geformt, insbesondere geschliffen wird,
wobei die Laserbehandlung mittels Laserstrahldispergieren oder Laserstrahllegieren erfolgt und wobei nach einem Aufschmelzen des aus einem legierten Stahl bestehenden Klingengrundwerkstoffs zur Erzielung eines feinstkömigen Gefüges hoher Festigkeit bei gleichzeitig guter Zähigkeit

2. Verfahren nach Anspruch 1, **dadurch gekennzeichnet, daß** die Laserbehandlung mittels Laserstrahlumschmelzung mit rascher Abkühlung zur Erzielung eines feinkörnigen Gefüges und zur Vermeidung von Karbidbildung erfolgt. und Verschleißbeständigkeit in die schmelzflüssige Phase des Klingengrundwerkstoffs Zusatzwerkstoffe eingebracht werden.

3. Verfahren nach Anspruch 1 oder 2, **dadurch gekennzeichnet, daß** die Laserbehandlung bis in eine Tiefe von 1,0 mm bis 6,00 mm reicht.

4. Verfahren nach einem der Ansprüche 1 bis 3, **dadurch gekennzeichnet, daß** beim Laserstrahllegieren bzw. -dispergieren als Zusatzwerkstoff ein Werkstoff der Gruppe Chrom, Wolfram, Molybdän, Titan, Vanadium, Tantal, Nickel, Kobalt oder Mangan einzeln oder in Kombination hieraus verwendet wird.

5. Verfahren nach einem der Ansprüche 1 bis 4, **dadurch gekennzeichnet, daß** als Zusatzwerkstoff hochschmelzende Carbide, Nitride und/oder Oxide verwendet werden.

6. Verfahren nach einem der vorhergehenden Ansprüche, **dadurch gekennzeichnet, daß** die Zusatzwerkstoffe draht-, gas-, pulver- und/oder pastenförmig der vom Laserstrahl aufgeschmolzenen Zone direkt zugeführt werden.

7. Verfahren nach einem der vorhergehenden Ansprüche, **dadurch gekennzeichnet, daß** der Klingengrundwerkstoff nach erfolgter Laseroberflächenbehandlung einer nachfolgenden Wärmebehandlung unterzogen wird.

8. Verfahren nach einem der vorhergehenden Ansprüche, **dadurch gekennzeichnet, daß** die Form der Klinge (5) mittels Laser ausgeschnitten wird.

9. Verfahren nach Anspruch 8, **dadurch gekennzeichnet, daß** der laserbehandelte Bereich zentrisch geschnitten oder geschliffen wird.

10. Klinge (5), vorzugsweise hergestellt nach dem Verfahren gemäß den Ansprüchen 1 bis 9, wobei diese aus einem korrosionsbeständigen Grundwerkstoff, der aus einem legierten Stahl gebildet ist, besteht und das Klingenmaterial im laserbehandelten Bereich durch Aufnahme eines oder mehrerer Zusatzwerkstoffe im Vergleich zum unbehandelten Grundwerkstoff eine mechanische und chemische Aufwertung aufweist, wobei der laserbehandelte Bereich einen hohen Aufmischungsgrad zwischen Grundwerkstoff und Zusatzwerkstoff aufweist.

## Claims

1. A method of manufacturing a blade for a cutting tool, particularly a knife, in which
a) the base material of the blade, consisting of an alloyed steel, is laser treated in a first method step along a curve contour determined by the subsequent cutting edge of the blade (5) and, in a second method step, the cutting edge of the blade (5) is shaped, particularly cut to size, within the laser treated region along the curve contour determined by the subsequent blade shape
or
b) the base material of the blade, consisting of an alloyed steel, is processed in a first method step by stamping or trimming to shape the subsequent cutting edge, the laser treatment is then performed in a second method step on the narrow side constituting the subsequent cutting edge and the cutting edge is then formed, particularly ground, within the laser treated region in a third method step,
whereby the laser treatment is effected by means of laser beam dispersion or laser beam alloying and whereby, after melting the base material of the blade, consisting of an alloyed steel, in order to achieve a very fine grained structure with high strength and, at the same time, good toughness and wear resistance, additives are introduced into the molten phase of the base material of the blade.

2. A method as claimed in claim 1, **characterised in that** the laser treatment is effected by means of laser beam remelting with rapid cooling in order to achieve a fine grain structure and to avoid carbide formation.

3. A method as claimed in Claim 1 or 2, **characterised in that** the laser treatment extends down to a depth 1.0 mm to 6.00 mm.

4. A method as claimed in one of Claims 1 to 3, **characterised in that** a material from the group comprising chromium, tungsten, molybdenum, titanium, vanadium, tantalum, nickel, cobalt or manganese, individually or in combination is used as the additive when laser beam alloying or dispersing.

5. A method as claimed in one of Claims 1 to 4, **characterised in that** high-melting point carbides, nitrides and/or oxides are used as the additive.

6. A method as claimed in one of the preceding claims, **characterised in that** the additives are supplied directly to the zone melted by the laser beam in wire, gas, powder and/or paste form.

7. A method as claimed in one of the preceding claims, **characterised in that** the base material of the blade is subjected to a subsequent heat treatment after the laser surface treatment has been effected.

8. A method as claimed in one of the preceding claims, **characterised in that** the shape of the blade (5) is cut out by means of a laser.

9. A method as claimed in Claim 8, **characterised in that** the laser treated region is cut or ground centrally.

10. A blade (5), preferably manufactured in accordance with the method as claimed in Claims 1 to 9, whereby it consists of a corrosion-resistant base material, which is constituted by an alloyed steel, and the blade material is mechanically and chemically improved in the laser treated region, in comparison to the untreated base material, by the incorporation of one or more additives, whereby the laser treated region has a high degree of mixing of the base material and the additive.

## Revendications

1. Procédé de fabrication d'une lame d'un outil de coupe, en particulier d'un couteau,
a) le métal de base de la lame constitué d'un acier allié étant traité au laser, au cours d'une première étape de procédé, le long d'un contour courbe déterminé par le tranchant ultérieur de la lame (5) et le tranchant de la lame (5) étant formé, en particulier découpé, au cours d'une seconde étape de procédé, le long du contour courbe déterminé par la forme ultérieure de la lame à l'intérieur de la zone traitée au laser,
ou
b) le métal de base de la lame constitué d'un acier allié étant usiné, au cours d'une première étape de procédé, par découpage à la matrice ou ébavurage en vue de la formation du tranchant ultérieur, ensuite, au cours d'une deuxième étape de procédé, le traitement au laser est réalisé sur le côté étroit formant le tranchant ultérieur et enfin, au cours d'une troisième étape de procédé, le tranchant est formé, en particulier aiguisé, à l'intérieur de la zone traitée au laser,
le traitement au laser s'effectuant au moyen d'une dispersion au laser ou d'un alliage au laser et après que le métal de base de la lame constitué d'un acier allié ait fondu, afin d'obtenir une structure ultrafine présentant une solidité élevée et simultanément une résistance de bonne qualité et une résistance à l'usure, des métaux d'apport étant introduits dans la phase par voie sèche du métal de base de la lame.

2. Procédé selon la revendication 1, **caractérisé en ce que** le traitement au laser s'effectue au moyen d'une refusion au rayon laser comprenant un refroidissement rapide afin d'obtenir une structure ultrafine et afin d'éviter la formation de carbure.

3. Procédé selon la revendication 1 ou 2, **caractérisé en ce que** le traitement au laser atteint une profondeur allant de 1,0 mm à 6,00 mm.

4. Procédé selon l'une des revendications 1 à 3, **caractérisé en ce que** dans le cas de la dispersion ou de l'alliage au laser, un métal du groupe chrome, tungstène, molybdène, titane, vanadium, tantale, nickel, cobalt ou manganèse est utilisé individuellement ou en combinaison à partir de ceux-ci comme métal d'apport.

5. Procédé selon l'une des revendications 1 à 4, **caractérisé en ce que** des carbures, des nitrures et/ou des oxydes à point de fusion élevé sont utilisés comme métal d'apport.

6. Procédé selon l'une des revendications précédentes, **caractérisé en ce que** les métaux d'apport sont amenés directement à la zone fondue par le rayon laser sous forme de fil, de gaz, de poudre et/ou de pâte.

7. Procédé selon l'une des revendications précédentes, **caractérisé en ce que** le métal de base de la lame est soumis, après que le traitement de surface au laser ait été effectué, à un traitement thermique ultérieur.

8. Procédé selon l'une des revendications précédentes, **caractérisé en ce que** la forme de la lame (5) est découpée à l'aide du laser.

9. Procédé selon la revendication 8, **caractérisé en ce que** la zone traitée au laser est découpée ou aiguisée de manière centrale.

10. Lame (5), fabriquée de préférence d'après le procédé selon les revendications 1 à 9, celle-ci étant constituée d'un métal de base résistant à la corrosion, qui est formé à partir d'un acier allié, et le matériau de la lame comprenant dans la zone traitée au laser, en recevant un ou plusieurs métal(métaux) de base en comparaison du métal de base non traité, une revalorisation mécanique et chimique, la zone traitée au laser comprenant un degré de dilution élevé entre le métal de base et le métal d'apport.
